# EUROPÄISCHE PATENTSCHRIFT

(11) **EP 0 499 053 B1**
(45) Veröffentlichungstag und Bekanntmachung des Hinweises auf die Patenterteilung: **28.05.1997**
(21) Anmeldenummer: 92100907.2
(22) Anmeldetag: 21.01.1992
(51) Int. Cl.: C08G 18/48, C08G 18/66, C08K 5/15, C08L 75/08

(54) **Verfahren zur Herstellung von Polyurethan-Elastomeren und hierfür geeignete Mischungen aus Polyoxybutylen-polyoxyalkylen-glykolen und Glycidylverbindungen**
Process for the production of polyurethane elastomers and mixtures of polyoxybutylene-polyoxyalkylene glycols and glycidyl compounds suitable therefore
Procédé de préparation d'élastomères de polyuréthane et compositions de polyoxybutylène-polyoxyalcoylène-glycols et de composés glycidiliques appropriées à ce procédé

(30) Priorität: 12.02.1991 DE 4104199
(43) Veröffentlichungstag der Anmeldung: 19.08.1992
(73) Patentinhaber: BASF Aktiengesellschaft, 67063 Ludwigshafen (DE)
(72) Erfinder: Abel, Ulrich, Dr., W-6701 Waldsee (DE); Lehrich, Friedhelm, Dr., W-6720 Speyer (DE); Straehle, Wolfgang, Dr., W-6900 Heidelberg (DE); Groll, Peter, Dr., W-6737 Boehl-Iggelheim (DE)

(56) Entgegenhaltungen:
- EP-A- 004 356
- DE-A- 1 967 018
- DE-A- 2 433 020
- FR-A- 2 186 508
- CHEMICAL ABSTRACTS, vol. 87, no. 8, 22. August 1977, Columbus, Ohio, US; abstract no. 54112c & JP-A-52 042 596

## Beschreibung

Gegenstände der Erfindung sind ein Verfahren zur Herstellung von Polyurethan-Elastomeren, im folgenden auch abgekürzt PU-Elastomere genannt, wie z.B. PU-Fasern, thermoplastische Polyurethan-Elastomere (TPU), PU-Gießelastomere, und andere, wobei diese kompakt oder zellig sein können, durch Umsetzung von
a) organischen und/oder modifizierten organischen Polyisocyanaten mit
b) Polyoxybutylen-polyoxyalkylen-glykolen mit einem Molekulargewicht von 500 bis 9000,
c) Kettenverlängerungs- und/oder Vernetzungsmitteln mit einem Molekulargewicht kleiner als 400 und
d) Glycidylverbindungen
in Gegenwart oder Abwesenheit von
e) Treibmitteln
f) Katalysatoren
g) Hilfsmitteln und/oder Zusatzstoffen,
wobei man die Aufbaukomponenten (a) bis (c) in solchen Mengen verwendet, daß das Äquivalenzverhältnis von NCO-Gruppen (a) zur Summe der reaktiven Wasserstoffatome der Komponenten (b) und (c) 0,95 bis 1,15 : 1 beträgt, und Mischungen aus den Polyoxybutylen-polyoxyalkylen-glykolen (b) und Glycidylverbindungen (d).

Zellige oder kompakte PU-Gießelastomere und TPU sind seit langem aus zahlreichen Patent- und Literaturveröffentlichungen bekannt. Ihre technische Bedeutung beruht auf der Kombination hochwertiger mechanischer Eigenschaften mit den Vorteilen der kostengünstigen Verarbeitungsmethoden. Durch die Verwendung verschiedenartiger chemischer Aufbaukomponenten in unterschiedlichen Mengenverhältnissen können thermoplastisch verarbeitbare oder vernetzte, kompakte oder zellige PU-Elastomere hergestellt werden, die sich hinsichtlich ihrer Verarbeitbarkeit und ihren mechanischen Eigenschaften vielfältig unterscheiden. Eine Übersicht über PU-Elastomere, ihre Eigenschaften und Anwendungen wird z. B. im Kunststoff-Handbuch, Band 7, Polyurethane, 1. Auflage, 1966, herausgegeben von Dr. R. Vieweg und Dr. A. Höchtlen, und 2. Auflage, 1983, herausgegeben von Dr. G. Oertel (Carl-Hanser-Verlag, München, Wien) gegeben.

Derartige PU-Elastomere können beispielsweise unter Verwendung von Polyoxybutylen-glykolen als Polyhydroxyverbindung hergestellt werden (FR-A-21 86 508). Die erhaltenen PU-Elastomeren und TPU weisen sehr gute mechanische Eigenschaften und eine hohe Hydrolysebeständigkeit auf. Nachteilig an diesen Produkten ist jedoch ihr hohes Ölaufnahmevermögen.

In der EP-A-004 356 (US 4 224 432) werden ferner Polyoxybutylen-polyoxyalkylen-glykole, Verfahren zu ihrer Herstellung und ihre Verwendung zur Herstellung von Polyurethanen beschrieben. Verwendet man diese Polyoxybutylen-polyoxyalkylen-glykole, hergestellt durch Copolymerisation von Tetrahydrofuran und Ethylenoxid oder 1,2-Propylenoxid, anstelle von Polyoxybutylen-glykol zur Herstellung der PU-Elastomeren, so wird ihr ölaufnahmevermögen zwar stark vermindert, jedoch erleiden die PU-Elastomeren auch eine beträchtliche Verschlechterung ihrer mechanischen Eigenschaften. Außerdem zeigen die auf diese Weise erhaltenen PU-Elastomeren eine starke Gelb- bis Braunfärbung, die mit einer starken Geruchsbelästigung bei ihrer Herstellung verbunden ist.

Nach Angaben der DD-A-238 992 finden epoxidierte synthetische Produkte wie epoxidierte Triglyceride, Alkylepoxistearate, -phthalate, -tetrahydrophthalate oder epoxidierte Naturprodukte wie epoxidiertes Sojaöl, Rüböl, Rapsöl u. dgl. verwendung als Hydrolysestabilisator für PU-Elastomere auf der Grundlage von Polyesterolen.

Glycidylether aus aliphatischen und aromatischen Hydroxylverbindungen eignen sich nach Angaben US-A-3 793 362 ferner zur Reduzierung der Acidität und des hydrolysierbaren Chlorgehalts von Mischungen aus Diphenylmethan-diisocyanaten und Polyphenyl-polymethylen-polyisocyanaten.

Die Aufgabe der vorliegenden Erfindung bestand darin, möglichst farblose PU-Elastomere, vorzugsweise TPU und PU-Gießelastomere, mit geringer Ölquellung und sehr guten mechanischen Eigenschaften herzustellen. Vermindert werden sollte insbesondere ihre Quellung in Öl und ihr ölaufnahmevermögen.

Diese Aufgabe konnte überraschenderweise gelöst werden durch die Verwendung von hydrolysestabilen Polyoxybutylen-polyoxyalkylen-glykolen als höhermolekulare Polyhydroxylverbindung zur Bildung der PU-Weichsegmente in Verbindung mit dem Zusatz von ausgewählten Glycidylverbindungen.

Gegenstand der Erfindung ist somit ein Verfahren zur Herstellung von Polyurethan-Elastomeren durch Umsetzung von
a) organischen und/oder modifizierten organischen Polyisocyanaten mit
b) mindestens einem Polyoxybutylen-polyoxyalkylenglykol mit einem Molekulargewicht von 500 bis 9000,
c) mindestens einem Kettenverlängerungs- und/oder Vernetzungsmittel mit einem Molekulargewicht kleiner als 400 und
d) mindestens einer Glycidylverbindung
in Gegenwart oder Abwesenheit von
e) Treibmitteln
f) Katalysatoren
g) Hilfsmitteln und/oder Zusatzstoffen,
wobei man die Aufbaukomponenten (a) bis (c) in solchen Mengen verwendet, daß das Äquivalenzverhältnis von NCO-Gruppen (a) zur Summe der reaktiven Wasserstoffatome der Komponenten (b) und (c) 0,95 bis 1,15 : 1 beträgt, das dadurch gekennzeichnet ist, daß man als Polyoxybutylen-polyoxyalkylen-glykole (b) verwendet:

Polyoxybutylen-polyoxyethylen-glykole, Polyoxybutylen-polyoxypropylen-glykole, Polyoxybutylen-polyoxypropylen-polyocyethylenglykole oder Mischungen aus mindestens 2 der genannten Polyoxybutylen-polyoxyalkylenglykole und die Glycidylverbindungen (d) Einheiten mit der Struktur 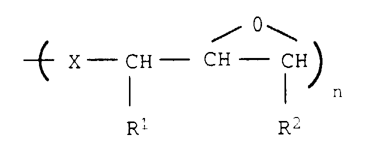 gebunden enthalten, in der bedeuten:
- n: eine Zahl von 1 bis 6
- X: eine Alkylen-, Arylengruppe, ein Sauerstoff- oder Stickstoffbrückenglied,
- R¹ und R²: gleiche oder verschiedene Reste aus der Gruppe der Methyl- oder Ethylreste und vorzugsweise Wasserstoff.

Gegenstand der Erfindung sind ferner zur Herstellung der PU-Elastomeren geeignete Stoffmischungen, die, bezogen auf das Gesamtgewicht, bestehen aus

85 bis 99,95 Gew.-%, vorzugsweise 95 bis 99,9 Gew.-% und insbesondere 98,5 bis 99,5 Gew.-% mindestens eines Polyoxybutylenpolyoxyalkylen-glykols (b) mit einem Molekulargewicht von 500 bis 9000, vorzugsweise von 500 bis 3500 und insbesondere von 800 bis 2200, das mindestens 50 Gew.-%, vorzugsweise 50 bis 90 Gew.-% und insbesondere 65 bis 80 Gew.-%, bezogen auf das Gesamtgewicht von (b), Oxybutyleneinheiten besitzt und das die Oxybutyleneinheiten und Oxyalkyleneinheiten aus der Gruppe der Oxyethylen- und Oxypropyleneinheiten blockweise oder in statistischer Verteilung gebunden enthält, ausgewählt aus der Gruppe der Polyoxybutylenpolyoxyethylen-glkyole, Polyoxybutylen-polyoxypropylen-glykole und Polyoxybutylen-polyoxypropylen-polyoxyethylen-glykole oder von Mischungen aus mindestens zwei der genannten Polyoxybutylen-polyoxyalkylen-glykole
und
15 bis 0,05 Gew.-%, vorzugsweise 5 bis 0,1 Gew.-% und insbesondere 1,5 bis 0,5 Gew.-% mindestens einer Glycidylverbindung (d), die Einheiten mit der Struktur 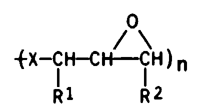 gebunden enthält, in der bedeuten:
- n: eine Zahl von 1 bis 6, vorzugsweise 2 bis 4 und insbesondere 2,
- X: einer Alkylengruppe mit 1 bis 6, vorzugsweise 1 bis 3 Kohlenstoffatomen, eine Arylengruppe, vorzugsweise eine Phenylengruppe und vorzugsweise ein Brückenglied aus Stickstoff und insbesondere ein Brückenglied aus Sauerstoff und
- R¹ und R²: gleich oder verschieden und eine Methyl- oder Ethylgruppe oder vorzugsweise ein Wasserstoff sind.

Die nach dem erfindungsgemäßen Verfahren hergestellten PU-Elastomeren sind im wesentlichen farblos, besitzen einen deutlich höheren K-Wert und weisen erheblich verbesserte mechanische Eigenschaften, wie eine deutlich verbesserte Zugfestigkeit und -dehnung, einen beträchtlich reduzierten Abrieb und verbesserte Tieftemperatureigenschaften auf. Reduziert werden konnte ferner die Ölquellung und das Ölaufnahmevermögen. Erwähnenswert ist ferner die erhöhte Fließfähigkeit der Reaktionsmischung zur Bildung der PU-Elastomeren, insbesondere der PU-Gießelastomeren und die sehr gute Verarbeitbarkeit der TPU-Granulate bei der Bildung von Formkörpern nach dem Spritzguß oder Extrusionsverfahren.

Als Aufbaukomponenten zur Herstellung der PU-Elastomeren, vorzugsweise der TPU und zelligen oder kompakten PU-Gießelastomeren eignen sich die aus der Polyurethanchemie bekannten Verbindungen, zu denen im einzelnen folgendes ausgeführt wird:

a) Als organische, gegebenenfalls modifizierte Polyisocyanate (a) finden zweckmäßigerweise aliphatische, cycloaliphatische und vorzugsweise aromatische Diisocyanate Verwendung. Im einzelnen seien beispielhaft genannt: aliphatische Diisocyanate, wie Hexamethylen-diisocyanat-1,6, 2-Methyl-pentamethylen-diisocyanat-1,5, 2-Ethyl-butylen-diisocyanat-1,4 oder Mischungen aus mindestens zwei der genannten aliphatischen Diisocyanate, cycloaliphatische Diisocyanate, wie Isophoron-diisocyanat, 1,4-Cyclohexan-diisocyanat, 1-Methyl-2,4- und -2,6-cyclohexan-diisocyanat sowie die entsprechenden Isomerengemische, 4,4'-, 2,4'- und 2,2'-Dicyclohexylmethan-diisocyanat sowie die entsprechenden Isomerengemische und vorzugsweise aromatische Diisocyanate, wie 2,4-Toluylen-diisocyanat, Gemische aus 2,4- und 2,6-Toluylen-diisocyanat, 4,4'-, 2,4'- und 2,2'-Diphenylmethan-diisocyanat, Gemische aus 2,4'- und 4,4'-Diphenylmethan-diisocyanat, urethanmodifizierte flüssige 4,4'- und/oder 2,4'-Diphenylmethan-diisocyanate, 4,4'-Diisocyanato-diphenylethan-1,2, Gemische aus 4,4'-, 2,4'- und 2,2'-Diisocyanato-diphenylethan-1,2, vorteilhafterweise solche mit einem 4,4'-Diisocyanato-diphenylethan-1,2-Gehalt von mindestens 95 Gew.-% und 1,5-Naphthylen-diisocyanat. Vorzugsweise verwendet werden Diphenylmethan-diisocyanat-Isomerengemische mit einem 4,4'-Diphenylmethan-diisocyanatgehalt von größer als 96 Gew.-% und insbesondere im wesentlichen reines 4,4'-Diphenylmethan-diisocyanat.

Die organischen Diisocyanate können gegebenenfalls in untergeordneten Mengen, z.B. in Mengen bis zu 3 Mol.%, vorzugsweise bis zu 1 Mol%, bezogen auf das organische Diisocyanat, durch ein tri- oder höherfunktionelles Polyisocyanat ersetzt werden, wobei dessen Mengen bei der Herstellung von TPU jedoch so begrenzt werden muß, daß noch thermoplastisch verarbeitbare Polyurethane erhalten werden. Eine größere Menge an derartigen mehr als difunktionellen Isocyanaten wird zweckmäßigerweise durch die Mitverwendung von weniger als difunktionellen Verbindungen mit reaktiven Wasserstoffatomen, ausgeglichen, so daß eine zu weitgehende chemische Vernetzung des Polyurethans vermieden wird. Beispiele für mehr als difunktionelle Isocyanate sind Mischungen aus Diphenylmethan-diisocyanaten und Polyphenyl-polymethylen-polyisocyanaten, sog. Roh-MDI sowie flüssige, mit Isocyanurat-, Harnstoff-, Biuret-, Allophanat-, Urethan- und/oder Carbodiimidgruppen modifizierte 4,4'- und/oder 2,4'-Diphenylmethan-diisocyanate.

Als geeignete monofunktionelle Verbindungen mit einem reaktiven Wasserstoffatom, die auch als Molekulargewichtsregler verwendbar sind, seien z. B. genannt: Monoamine wie z. B. Butyl-, Dibutyl-, Octyl-, Stearyl-, N-Methylstearylamin, Pyrrolidon, Piperidin und Cyclohexylamin, und Monoalkohole wie z. B. Butanol, Amylalkohol, 1-Ethylhexanol, Octanol, Dodecanol, Cyclohexanol und Ethylenglykolmonoethylether.

b) Als höhermolekulare Polyoxybutylen-polyoxyalkylen-glykole (b) kommen erfindungsgemäß in Betracht: Polyoxybutylen-polyoxyethylen-glykole, Polyoxybutylen-polyoxypropylen-glykole und Polyoxybutylen-polyoxypropylen-polyoxyethylen-glykole oder Mischungen aus mindestens zwei der genannten Polyoxybutylen-polyoxyalkylen-glykole. Die Polyoxybutylen-polyoxyalkylen-glykole besitzen Molekulargewichte von 500 bis 9000, vorzugsweise 500 bis 3500 und inbesondere 800 bis 2200 und enthalten mindestens 50 Gew.-%, vorzugsweise 50 bis 90 Gew.-% und insbesondere 65 bis 80 Gew,-%, bezogen auf das Gesamtgewicht von (b) Oxybutyleneinheiten. Die Oxybutyleneinheiten können ebenso wie die Oxyalkyleneinheiten, das sind Oxyethylen- oder Oxypropylen- oder Oxyethylen- und Oxypropyleneinheiten, blockweise oder in statistischer Verteilung gebunden sein. Als Polyoxybutylen-polyoxyalkylenpolyole besonders bewährt haben sich und daher vorzugsweise verwendet werden Polyoxybutylen-polyoxyethylen-glykole mit blockweise oder statistischer Verteilung der Oxybutylen- und Oxyethyleneinheiten, wobei solche mit Molekulargewichten von 800 bis 2200 insbesondere bevorzugt sind.

c) Geeignete Kettenverlängerungs- und/oder Vernetzungsmittel besitzen Molekulargewichte kleiner als 400, vorzugsweise von 60 bis 300. Vorzugsweise verwendet werden Alkandiole mit 2 bis 12 Kohlenstoffatomen, vorzugsweise 2, 4 oder 6 Kohlenstoffatomen wie z. B. Ethan-, 1,3-Propan, 1,5-Pentan-, 1,6-Hexan-, 1,7-Heptan-, 1,8-Octan-, 1,9-Nonan-, 1,10-Decandiol und insbesondere 1,4-Butandiol und Di-alkylenglykole mit 4 bis 8 Kohlenstoffatomen, wie z. B. Diethylenglykol und Dipropylen-glykol. Geeignet sind jedoch auch verzweigtkettige und/oder ungesättigte Alkandiole mit üblicherweise nicht mehr als 12 Kohlenstoffatomen, wie z. B. 1,2-Propandiol, 2-Methyl-, 2,2-Di-methyl-propandiol-1,3, 2-Butyl-2-ethylpropandiol-1,3, Buten-2-diol-1,4 und Butin-2-dio-1,4, Diester der Terephthalsäure mit Glykolen mit 2 bis 4 Kohlenstoffatomen, wie z. B. Terephthalsäure-bis-ethylenglykol- oder -butandiol-1,4, Hydroxyalkylenether des hydrochinons oder Resorcins, wie z. B. 1,4-Di-(β-hydroxyethyl)-hydrochinon oder 1,3-Di-(β-hydroxyethyl)-resorcin, Alkanolamine mit 2 bis 12 Kohlenstoffatomen, wie z. B. Ethanolamin, 2-Aminopropanol und 3-Amino-2,2-dimethylpropanol, N-Alkyldialkanolamine, wie z.B. N-Methyl- und N-Ethyl-diethanolamin, (cyclo)aliphatische Diamine mit 2 bis 15 Kohlenstoffatomen, wie z.B. Ethylen-, 1,2-, 1,3-Propylen-, 1,4-Butylen- und 1,6-Hexamethylen-diamin, Isophoron-diamin, 1,4-Cyclohexylen-diamin und 4,4'-Diamino-dicyclohexylmethan, N-Alkyl- und N,N'-Dialkyl-alkylendiamine wie z.B. N-Methyl-propylendiamin und N,N'-Dimethyl-ethylen-diamin und aromatische Diamine, wie z.B. Methylen- bis(4-amino-3-benzoesäuremethylester), 1,2-Bis-(2-aminophenyl-thio)ethan, Trimethylenglykol-di-p-aminobenzoat, 2,4- und 2,6-Toluylen-diamin, 3,5-Diethyl-2,4- und -2,6-toluylen-diamin, 4,4'-Diamino-diphenylmethan, 3,3'-Dichlor-4,4'-diamino-diphenylmethan und primäre ortho-di-, -tri- und/oder -tetraalkylsubstituierte 4,4'-Diamino-diphenylmethane, wie z.B. 3,3'-Di- und 3,3',5,5'-Tetraisopropyl-4,4'-diamino-diphenylmethan.

Als höherfunktionelle Vernetzungsmittel, die zweckmäßigerweise zur Herstellung der PU-Gießelastomeren mitverwendet werden, seien beispielhaft genannt: tri- und höherfunktionelle Alkohole, wie z.B. Glycerin, Trimethylolpropan, Pentaerythrit und Trihydroxycyclohexane und Tetrahydroxyalkylalkylen-diamine, wie z.B. Tetra-(2-hydroxyethyl)-ethylendiamin oder Tetra-(2-hydroxypropyl)ethylen-diamin.

Die erfindungsgemäß geeigneten Kettenverlängerungs- und Vernetzungsmittel können einzeln oder in Form von Mischungen verwendet werden. Verwendbar sind auch Gemische aus Kettenverlängerungs- und Vernetzungsmitteln.

Zur Einstellung der Härte der PU-Elastomeren sowie des Schmelzindex der TPU können die Aufbaukomponenten (b) und (c) in relativ breiten Mengenverhältnissen variiert werden, wobei die Härte und die Schmelzviskosität mit zunehmendem Gehalt an difunktionellen Kettenverlängerungsmittel (c) im TPU ansteigt, während der Schmelzindex abnimmt.

In Abhängigkeit von der gewünschten Härte können die erforderlichen Mengen der Aufbaukomponenten (b) und (c) auf einfache Weise experimentell bestimmt werden. Vorteilhafterweise verwendet werden bezogen auf das Gewicht der Polyoxybutylen-polyoxyalkylen-glykole (b) 5 bis 50 Gew.-% des Kettenverlängerungs- und/oder Vernetzungsmittels (c), wobei zur Herstellung von weichen PU-Elastomeren vorzugsweise 8 bis 15 Gew.-% und von harten PU-Elastomeren vorzugsweise 30 bis 50 Gew.-% eingesetzt werden.

d) Zur Herstellung der PU-Elastomeren nach dem erfindungsgemäßen Verfahren finden als zusätzliche Aufbaukomponente Glycidylverbindungen (d) Verwendung, die Einheiten mit der Struktur 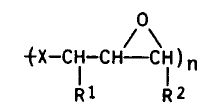 gebunden enthalten, in der bedeuten:
- n: eine Zahl von 1 bis 6, vorzugsweise 2 bis 4 und insbesondere 2.
- X: eine Alkylengruppe mit 1 bis 6, vorzugsweise 1 bis 3 Kohlenstoffatomen, eine Arylengruppe, vorzugsweise eine Phenylengruppe, und vorzugsweise eine -N-Brückenglied und insbesondere ein -O-Brückenglied.
- R¹ und R²: können gleich oder verschieden sein und sind eine Methylgruppe, eine Ethylgruppe und vorzugsweise Wasserstoff.

Glycidylverbindungen der genannten Art sind beispielsweise 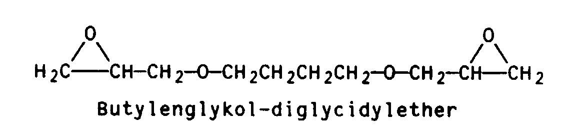 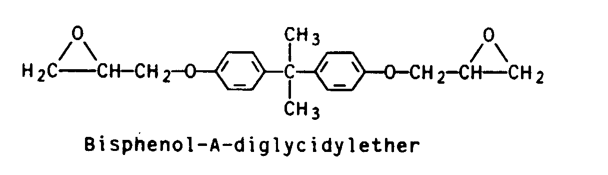 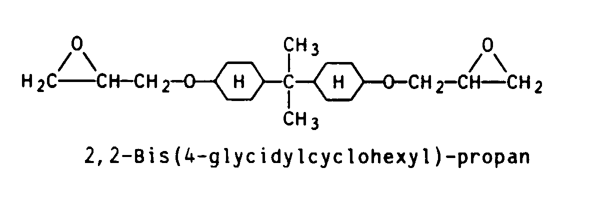 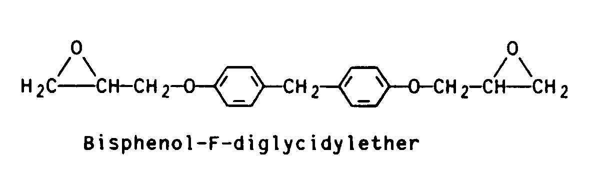 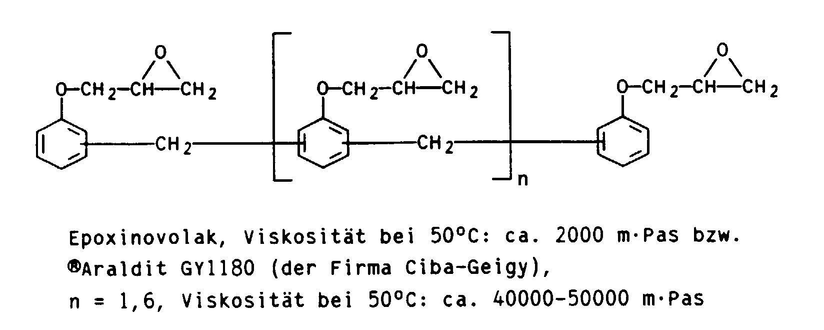 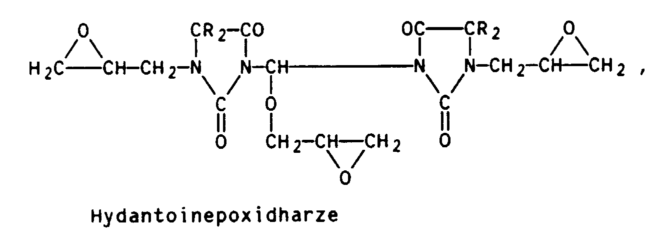 R = H oder CH₃

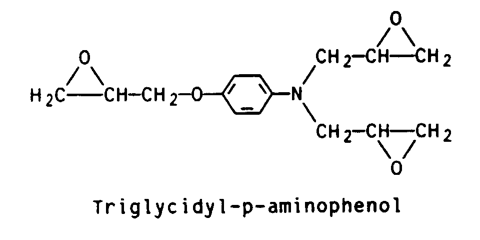

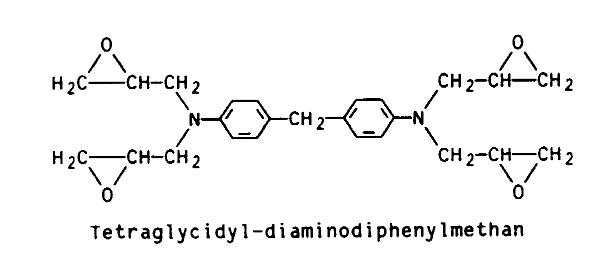

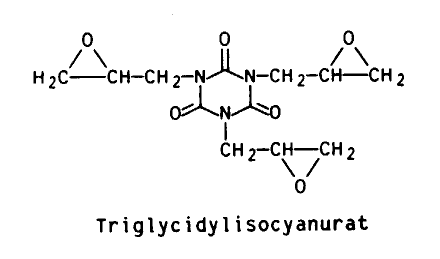

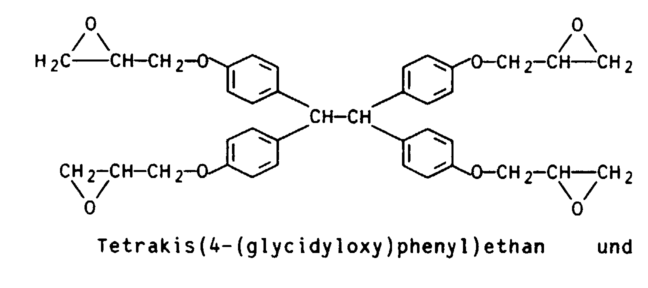

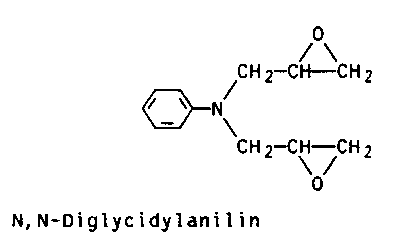

Die erfindungsgemäß verwendbaren Glycidylverbindungen können einzeln oder in Form von Mischungen eingesetzt werden. Vorzugsweise verwendet werden Glycidylverbindungen (d), die als Brückenglieder X Stickstoff oder Sauerstoff gebunden haben, wie Butylenglykol-diglycidylether, Triglycidyl-p-aminophenol, Triglycidylisocyanurat, Tetraglycidyl-4,4'-diamino-diphenylmethan, Tetrakis(4-(glycidyloxy)phenyl)ethan und insbesondere Bisphenol-A-diglycidylether.

Zur Herstellung der PU-Elastomeren werden die Glycidylverbindungen (d) üblicherweise in einer Menge von 0,05 bis 15 Gew.-%, vorzugsweise 0,1 bis 5 Gew.-% und insbesondere von 0,5 bis 1,5 Gew.-%, bezogen auf das Gesamtgewicht der Aufbaukomponenten (b) und (d) verwendet.

Die Herstellung der kompakten PU-Elastomeren, vorzugsweise PU-Gießelastomeren und TPU, wird vorzugsweise in Abwesenheit von Katalysatoren (f) und Hilfsmitteln (g) durchgeführt. Hingegen hat es sich als zweckmäßig erwiesen, zur Herstellung der zelligen PU-Elastomeren, vorzugsweise PU-Gießelastomeren, zusätzlich zu den erforderlichen Treibmitteln (c) auch Katalysatoren (f) und Hilfsmittel (g) mitzuverwenden. Zur Modifizierung der mechanischen Eigenschaften der PU-Elastomeren kann es ferner erforderlich sein, Zusatzstoffe (g) einzusetzen.

(e) Zu den Treibmitteln (e), welche zur Herstellung der zelligen PU-Elastomeren verwendet werden können, gehört vorzugsweise Wasser, das mit Isocyanatgruppen unter Bildung von Kohlendioxid reagiert. Die Wassermengen, die zweckmäßigerweise eingesetzt werden, betragen 0,01 bis 3 Gew.-Teile, vorzugsweise 0,1 bis 2 Gew.-Teile und insbesondere 0,2 bis 1 Gew.-Teile, bezogen auf 100 Gew.-Teile der höhermolekularen Polyoxybutylen-polyoxyalkylen-glykole (b).

Im Gemisch mit Wasser können auch physikalisch wirkende Treibmittel eingesetzt werden oder es können ausschließlich physikalisch wirkende Treibmittel Anwendung finden. Geeignet sind Flüssigkeiten, welche gegenüber den organischen, gegebenenfalls modifizierten Polyisocyanaten (a) inert sind und Siedepunkte unter 100°C, vorzugsweise unter 50°C, insbesondere zwischen -50°C und 30°C bei Atmosphärendruck aufweisen, so daß sie unter dem Einfluß der exothermen Polyadditionsreaktion verdampfen. Beispiele derartiger, vorzugsweise verwendbarer Flüssigkeiten sind Kohlenwasserstoffe, wie n- und iso-Pentan, technische Pentangemische, n- und iso-Butan und Propan, Ether, wie Furan, Dimethylether und Diethylether, Ketone, wie Aceton und Methylethylketon, Ester wie Ethylacetat und Methylformiat und vorzugsweise halogenierte Kohlenwasserstoffe, wie Methylenchlorid, Difluormethan, Trichlorfluormethan, Dichlordifluormethan, Dichlormonofluormethan, 1,1,1-Dichlorfluorethan, 1,1,1-Chlordifluorethan, Dichlortetrafluorethane, Tetrafluorethane, 1,1,2-Trichlor-1,2,2-trifluorethan und Heptafluorpropane, sowie Edelgase, wie z.B. Krypton. Auch Gemische dieser niedrigsiedenden Flüssigkeiten untereinander und/oder mit anderen substituierten oder unsubstituierten Kohlenwasserstoffen können verwendet werden.

Die erforderliche Menge an physikalisch wirkenden Treibmitteln kann in Abhängigkeit von der gewünschten Dichte der PU-Elastomeren auf einfache Weise ermittelt werden und beträgt ungefähr 1 bis 15 Gew.-Teile, vorzugsweise 2 bis 11 Gew.-Teile pro 100 Gew.-Teile der höhermolekularen Polyoxybutylen-polyoxyalkylen-glykole (b), wobei sich ihr Anteil bei der Mitverwendung von Wasser anteilmäßig verringert. Gegebenenfalls kann es zweckmäßig sein, die gegebenenfalls modifizierten Polyisocyanate (a) mit dem physikalisch wirkenden Treibmittel zu mischen und dadurch ihre Viskosität zu verringern.

f) Als Katalysatoren (f) werden insbesondere Verbindungen verwendet, die die Reaktion der Hydroxylgruppen enthaltenden Verbindungen der Komponenten (b) und (c) mit den Polyisocyanaten (a) stark beschleunigen. In Betracht kommen organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinn-dilaurat, Dibutylzinn-maleat und Dioctylzinn-diacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethyl-ethylendiamin, N,N,N',N'-Tetramethyl-butandiamin oder -hexandiamin, Pentamethyl-diethylentriamin, Tetramethyl-diaminoethylether, Bis-(dimethylaminopropyl)-harnstoff, 1,4-Dimethylpiperazin, 1,2-Dimethylimidazol, 1-Aza-bicyclo(3,3,0)-octan und vorzugsweise 1,4-Diaza-bicyclo-(2,2,2)-octan und Alkanolaminverbindungen, wie Triethanolamin, Triisopropanolamin, N-Methyl-und N-Ethyl-diethanolamin und Dimethylethanolamin. Vorzugsweise verwendet werden 0,001 bis 5 Gew.-%, insbesondere 0,05 bis 2 Gew.-% Katalysator bzw. Katalysatorkombination bezogen auf das Gewicht der Polyoxybutylen-polyoxyalkylen-glykole (b).

g) Der Reaktionsmischung zur Herstellung der PU-Elastomeren können gegebenenfalls auch noch Hilfsmittel und/oder Zusatzstoffe (g) einverleibt werden. Genannt seien beispielsweise oberflächenaktive Substanzen, Schaumstabilisatoren, Zellregler, Füllstoffe, Flammschutzmittel, Keimbildungsmittel, Oxidationsverzögerer, Stabilisatoren, Gleit- und Entformungshilfsmittel, Farbstoffe und Pigmente.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten, oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl und Zellregler, wie Paraffine, Fettalkohole und Dimethylpolysiloxane. Zur Verbesserung der Emulgierwirkung, der Zellstruktur und/oder Stabilisierung des Schaumes eignen sich ferner oligomere Polyacrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Polyoxybutylen-polyoxyalkylen-glykol (b) angewandt.

Als Füllstoffe, insbesondere verstärkend wirkende Füllstoffe, sind die an sich bekannten, üblichen organischen und anorganischen Füllstoffe, Verstärkungsmittel und Beschwerungsmittel zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Aluminiumsilikat, Titanoxide und Eisenoxide, Metallsalze wie Kreide, Schwerspat und anorganische Pigmente, wie Cadmiumsulfid, Zinksulfid sowie Glaspartikel. Als organische Füllstoffe kommen beispielsweise in Betracht: Ruß, Melamin, Blähgraphit, Kollophonium, Cyclopentadienylharze und Pfropfpolymerisate.

Als verstärkend wirkende Füllstoffe finden vorzugsweise Anwendung Fasern, beispielsweise Kohlefasern oder insbesondere Glasfasern, besonders dann, wenn eine hohe Wärmeformbeständigkeit oder sehr hohe Steifigkeit gefordert wird, wobei die Fasern mit Haftvermittlern und/oder Schlichten ausgerüstet sein können. Geeignete Glasfasern, die z.B. auch in Form von Glasgeweben, -matten, -vliesen und/oder vorzugsweise Glasseidenrovings oder geschnittener Glasseide aus alkaliarmen E-Glasern mit einem Durchmesser von 5 bis 200 µm, vorzugsweise 6 bis 15 µm eingesetzt werden, weisen nach ihrer Einarbeitung in die Formmassen im allgemeinen eine mittlere Faserlänge von 0,05 bis 1 mm, vorzugsweise von 0,1 bis 0,5 mm auf.

Die anorganischen und organischen Füllstoffe können einzeln oder als Gemische verwendet werden und werden der Reaktionsmischung üblicherweise in Mengen von 0,5 bis 50 Gew.-%, vorzugsweise 1 bis 30 Gew.-%, bezogen auf das Gewicht der Aufbaukomponenten (a) bis (d), einverleibt.

Geeignete Flammschutzmittel sind beispielsweise Trikresylphosphat, Tris-(2-chlorethyl)phosphat, Tris-(2-chlorpropyl)phosphat, Tris(1,3-dichlorpropyl)phosphat, Tris-(2,3-dibrompropyl)phosphat und Tetrakis-(2-chlorethyl)-ethylendiphosphat.

Außer den bereits genannten halogensubstituierten Phosphaten können auch anorganische Flammschutzmittel, wie roter Phosphor, Aluminiumoxidhydrat, Antimontrioxid, Arsentrioxid, Ammoniumpolyphosphat und Calciumsulfat oder Cyanursäurederivate, wie z.B. Melamin oder Mischungen aus mindestens zwei Flammschutzmitteln, wie z.B. Ammoniumpolyphosphaten und Melamin sowie gegebenenfalls Stärke und/oder Blähgraphit zum Flammfestmachen der erfindungsgemäß hergestellten PU-Elastomeren verwendet werden. Im allgemeinen hat es sich als zweckmäßig erwiesen, 5 bis 50 Gew.-Teile, vorzugsweise 5 bis 25 Gew.-Teile der genannten Flammschutzmittel oder -mischungen für jeweils 100 Gew.-Teile der Aufbaukomponenten (a) bis (d) zu verwenden.

Als Keimbildungsmittel können z.B. Talkum, Calciumfluorid, Natriumphenylphosphinat, Aluminiumoxid und feinteiliges Polytetrafluorethylen in Mengen bis zu 5 Gew.-%, bezogen auf das Gesamtgewicht der Aufbaukomponenten (a) bis (d), eingesetzt werden.

Geeignete Oxidationsverzögerer und Wärmestabilisatoren, die den erfindungsgemäßen Formmassen zugesetzt werden können, sind beispielsweise Halogenide von Metallen der Gruppe I des periodischen Systems, z.B. Natrium-, Kalium-, Lithium-Halogenide, gegebenenfalls in Verbindung mit Kupfer-(I)-Halogeniden, z.B. Chloriden, Bromiden oder Iodiden, sterisch gehinderte Phenole, Hydrochinone, sowie substituierte Verbindungen dieser Gruppen und Mischungen davon, die vorzugsweise in Konzentrationen bis zu 1 Gew.-%, bezogen auf das Gewicht der Aufbaukomponenten (a) bis (d), verwendet werden.

Beispiele für UV-Stabilisatoren sind verschiedene substituierte Resorcine, Salicylate, Benzotriazole und Benzophenone sowie sterisch gehinderte Amine, die im allgemeinen in Mengen bis zu 2,0 Gew.-%, bezogen auf das Gewicht der Aufbaukomponenten (a) bis (d), eingesetzt werden.

Gleit- und Entformungsmittel, die in der Regel ebenfalls in Mengen bis zu 1 Gew.-%, bezogen auf das Gewicht der Aufbaukomponenten (a) bis (d), zugesetzt werden, sind Stearinsäuren, Stearylalkohol, Stearinsäureester und -amide sowie die Fettsäureester des Pentaerythrits.

Ferner können organische Farbstoffe, wie Nigrosin, Pigmente, z.B. Titandioxid, Cadmiumsulfid, Cadmiumsulfidselenid, Phthalocyanine, Ultramarinblau oder Ruß zugesetzt werden.

Nähere Angaben über die oben genannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Carl-Hanser-Verlag, München, Wien, 1. und 2. Auflage, 1966 und 1983 zu entnehmen.

Zur Herstellung der PU-Elastomeren werden die organischen, gegebenenfalls modifizierten Polyisocyanate (a), die Polyoxybutylen-polyoxyalkylen-glykole (b) und Kettenverlängerungsmittel und/oder Vernetzungsmittel (c) in Gegenwart der Glycidylverbindungen (d) in solchen Mengen zur Umsetzung gebracht, daß das Äquivalenz-Verhältnis von NCO-Gruppen der Polyisocyanate (a) zur Summe der reaktiven Wasserstoffatome der Komponenten (b) und (c) 0,95 bis 1,15:1, vorzugsweise 1,00 bis 1,07:1 und insbesondere 1,01 bis 1,05:1 beträgt.

Die PU-Elastomeren können kontinuierlich oder diskontinuierlich nach den in der Literatur beschriebenen Verfahren, wie z.B. dem one shot- oder Prepolymer-Verfahren, mit Hilfe bekannter Mischvorrichtungen hergestellt werden. Die TPU werden zweckmäßigerweise nach dem Extruder-Verfahren (z.B. nach US 3 642 964) oder vorzugsweise nach dem Bandverfahren (z.B. nach GB-A-1 057 018) hergestellt.

Zur Herstellung der kompakten PU-Gießelastomeren werden die Ausgangskomponenten üblicherweise bei einer Temperatur von 15 bis 90°C, vorzugsweise von 20 bis 35°C homogen gemischt, die Reaktionsmischung in ein offenes, gegebenenfalls temperiertes Formwerkzeug eingebracht und aushärten gelassen. Zur Bildung von zelligen PU-Gießelastomeren können die Aufbaukomponenten in gleicher Weise gemischt und in das gegebenenfalls temperierte Formwerkzeug eingefüllt werden, in dem man die Reaktionsmischung zur Vermeidung einer verdichteten Randzone im wesentlichen druckfrei aufschäumen läßt oder das Formwerkzeug wird nach der Befüllung geschlossen und die Reaktionsmischung unter Verdichtung, z.B. mit einem Verdichtungsgrad von 1,1 bis 8, vorzugsweise von 1,2 bis 6 und insbesondere 2 bis 4 zur Bildung von Formkörpern aufschäumen lassen. Sobald die Formkörper eine ausreichende Festigkeit besitzen, werden diese entformt. Die Entformzeiten sind u.a. abhängig von der Formwerkzeugtemperatur, -geometrie und der Reaktivität der Reaktionsmischung und liegen üblicherweise in einem Bereich von 0,5 bis 20 Minuten.

Die nach dem erfindungsgemäßen Verfahren hergestellte TPU können nach bekannten Methoden granuliert, zwischengelagert und nach üblichen Verfahren der Thermoplastverarbeitung, z.B. durch Spritzgießen, Extrusion oder Kalandern, zu Formkörpern oder Folien verarbeitet werden.

Die nach dem erfindungsgemäßen Verfahren hergestellten kompakten PU-Elastomeren besitzen ohne Füllstoff eine Dichte von 1,0 bis 1,4 g/cm³, vorzugsweise von 1,1 bis 1,25 g/cm³, wobei Füllstoffe enthaltene Produkte üblicherweise eine Dichte größer als 1,2 g/cm³ aufweisen. Die zelligen PU-Elastomeren zeigen Dichten von 0,2 bis 1,1 g/cm³, vorzugsweise von 0,45 bis 0,95 g/cm³.

Die nach dem erfindungsgemäßen Verfahren hergestellten PU-Elastomeren finden Verwendung zur Herstellung von Formkörpern, vorzugsweise für den Maschinenbau und den Verkehrsmittelsektor. Sie eignen sich insbesonders zur Herstellung von Schläuchen, Häuten, Folien, Federelementen, Puffern und Deckschichten.

### Beispiele

### Herstellung eines TPU

### Beispiele 1 bis 10 und Vergleichsbeispiele I bis VI

### allgemeine Herstellungsvorschrift

a) Eine Mischung aus 1000 Gew.-Teilen eines Polyoxybutylen-poloxyalkylen-glykols und einer Glycidylverbindung wurde 1 Stunde lang bei 110°C und einem Druck von 2 mbar getrocknet. Nachdem der Mischung 400 Gew.-Teile 1,4-Butandiol einverleibt wurden, wurde diese auf 70°C erwärmt und unter intensivem Rühren mit einer einem NCO-Index von 101,5 entsprechenden Menge einer auf 65°C erhitzten Schmelze aus 4,4'-Diphenylmethan-diisocyanat versetzt. Bei Erreichen von 120°C (Reaktionstemperatur) wurde die homogene Reaktionsmischung auf eine auf 125°C aufgeheizte Heizplatte gegossen. Nach ca. 2 Minuten wurde das heiße Rohprodukt von der Platte genommen, grob zerkleinert und danach 15 Stunden bei 100°C getempert. Anschließend wurde das TPU der Shore-Härte 60D abgekühlt, danach granuliert und später zu Prüfkörpern verspritzt.
b) Man verfuhr analog den Angaben von (a), verwendete jedoch zur Herstellung eines TPU mit einer Shore-Härte von 88 A 125 Gew.-Teile 1,4-Butandiol.

Die zur Herstellung der TPU eingesetzten Glycidylverbindungen und deren Mengen in Gew.-%, bezogen auf das Gewicht der Polyoxybutylen-polyoxyalkylen-glykole, und die an den Prüfkörpern gemessene mechanischen Eigenschaften sind in Tabelle 1 zusammengefaßt.

### In Tabelle 1 bedeuten:

- PolyTHF ER 1800:: Ein Polyoxybutylen-polyoxyethylen-glykol mit einem Molekulargewicht von 1800, das ca. 30 Gew.-%, bezogen auf das Gesamtgewicht, Ethylenoxideinheiten in statistischer Verteilung gebunden enthält.
- PolyTHF ER 1250:: analog PolyTHF ER 1800, jedoch mit einem Molekulargewicht von 1250.
- PolyTHF EB 1200:: Ein Polyoxybutylen-polyoxyethylen-glykol mit einem Molekulargewicht von 1200, das ca. 30 Gew.-%, bezogen auf das Gesamtgewicht, Ethylenoxideinheiten als Block gebunden enthält.
- PolyTHF PR 1300:: Ein Polyoxybutylen-polyoxypropylen-glykol mit einem Molekulargewicht von 1300, das ca. 30 Gew.-%, bezogen auf das Gesamtgewicht, Propylenoxideinheiten in statischer Verteilung gebunden enthält.
- PolyTHF 2000:: Polyoxybutylenglykol mit einem Molekulargewicht von 2000.
- TrGIC:: Triglycidylisocyanurat,
- TGDDM:: Tetraglycidyl-4,4'-diamino-diphenylmethan,
- BFD:: Bisphenol-F-diglycidylether,
- DGA:: N,N-Diglycidylanilin,
- GY 1180:: Araldit® GY 1180 der Firma Ciba-Geigy, Basel.

Die mechanischen Eigenschaften an den Prüfkörpern wurden nach folgenden Methoden gemessen:
Ölquellung in ASTM-3 Öl, 15-tägige Lagerung bei 100°C,
Zugfestigkeit nach DIN 53 504,
Zugdehnung nach DIN 53 504,
K-Wert nach Fikentscher, Cellulosechemie 13 (1932), Seite 58
Kerbschlagzähigkeit nach DIN 53 453: % Bruch bei 0°C; o.B.: ohne Bruch

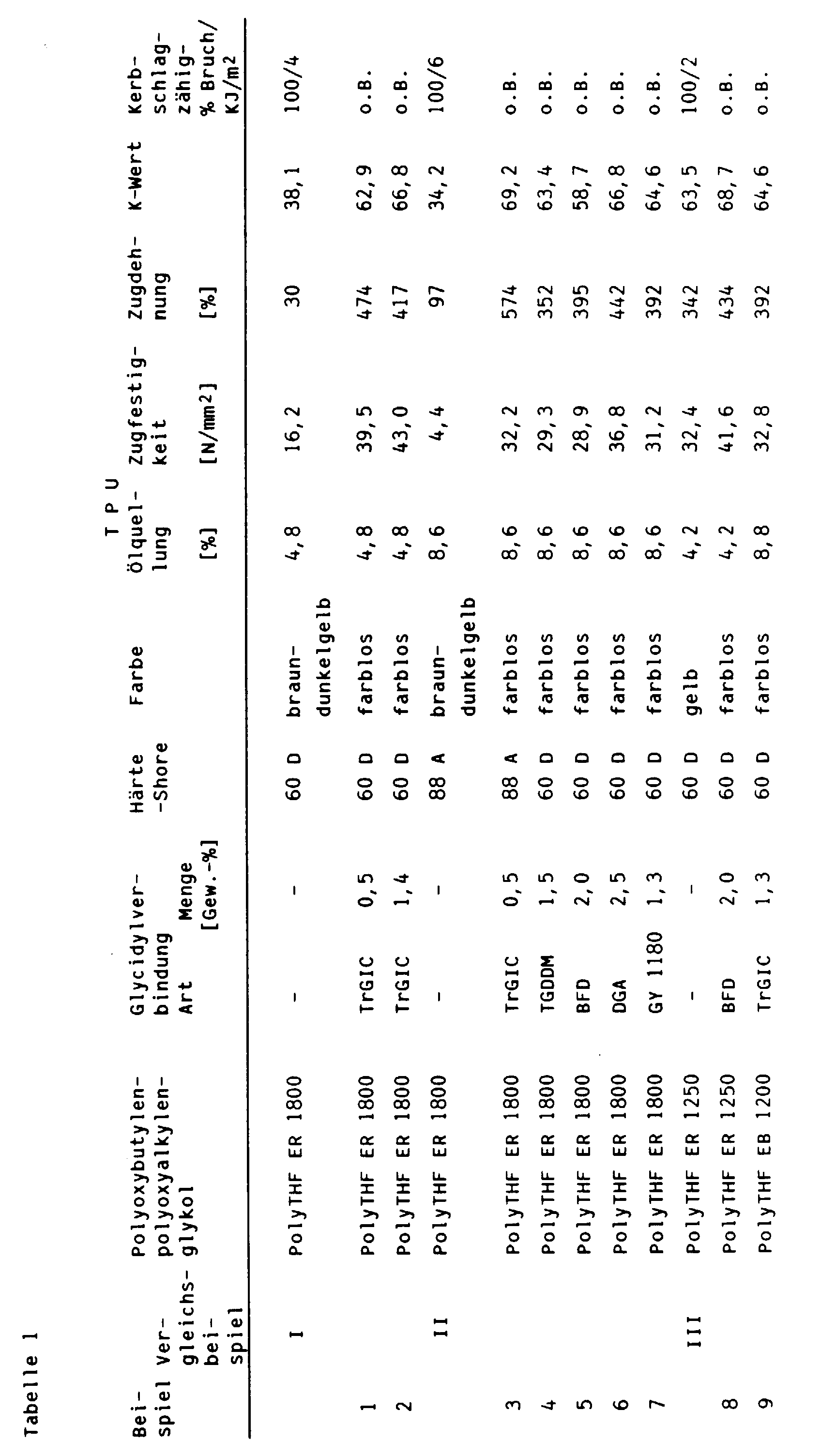

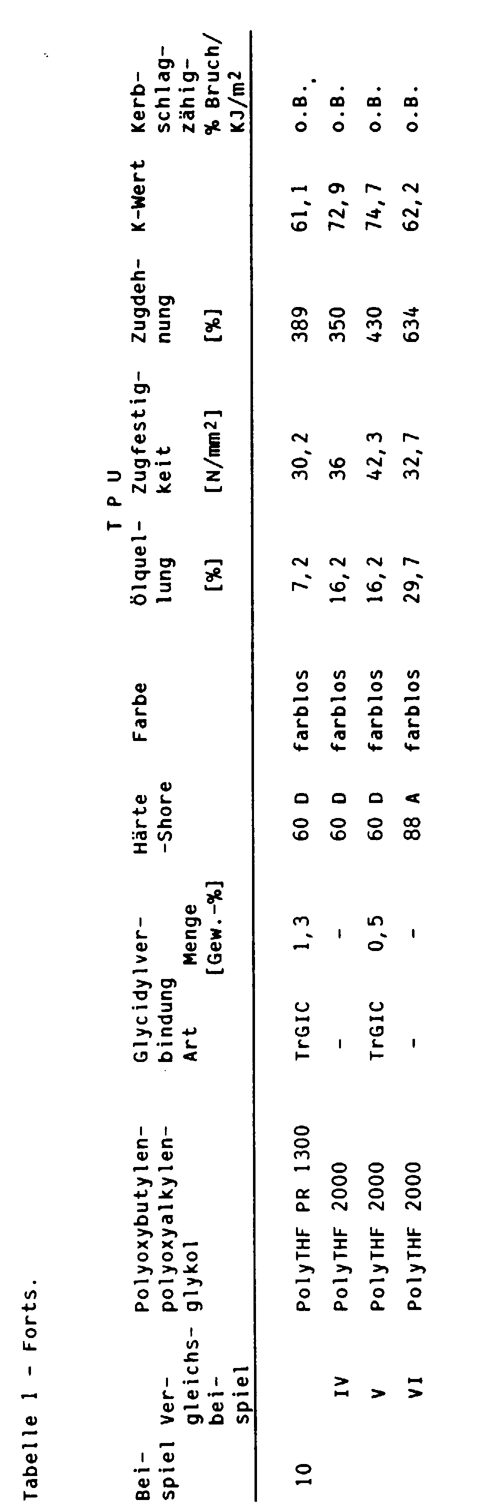

### Beispiel 11

Eine Mischung aus 1500 Gew.-Teilen eines Polyoxybutylen-polyoxyethylen-glykols mit einem Molekulargewicht von 1250, das ca. 30 Gew.-%, bezogen auf das Gesamtgewicht, Ethylenoxideinheiten in statistischer Verteilung gebunden enthält und 15 Gew.-Teilen Bisphenol-A-diglycidylether wurden eine Stunde lang bei 110°C und einem Druck von 2 mbar getrocknet. Nachdem der Mischung 185 Gew.-Teile 1,4-Butandiol einverleibt wurde, wurde diese auf 70°C erwärmt und unter intensivem Rühren mit einer einem NCO-Index von 104 entsprechenden Menge (846 Gew.-Teilen) einer auf 65°C erhitzten Schmelze aus 4,4'-Diphenylmethan-diisocyanat versetzt.

Die weitere Umsetzung der Reaktionsmischung erfolgte analog den Angaben des Beispiels 1a.

An einem aus dem erhaltenen TPU hergestellten Prüfkörper wurden folgende mechanische Eigenschaften gemessen:

| | |
|---|---|
| Härte-Shore: | 82,5 A |
| Farbe: | farblos |
| Ölquellung [%]: | 9,1 |
| Zugfestigkeit nach DIN 53 504 [N/mm²]: | 22,7 |
| Zugdehnung nach DIN 53 504 [%]: | 670 |
| K-Wert: | 66,3 |
| Kerbschlagzähigkeit nach DIN 53 453 [% Bruch bei 0°C]: | o.B. |

### Herstellung von PU-Gießelastomeren

### Vergleichsbeispiel VII und Beispiel 12

### VIIa) Herstellung eines NCO-Gruppen enthaltenden Prepolymeren als Vergleichssubstanz

1000 Gew.-Teile eines mit 0,003 Gew.-% Phosphorsäure stabilisierten Polyoxybutylen-polyoxyethylen-glykols mit einem Molekulargewicht von 1800, das ca. 30 Gew.-%, bezogen auf das Gesamtgewicht, Oxyethyleneinheiten in statistischer Verteilung gebunden enthält, wurde bei 110°C und unter einem Druck von 10 bis 20 mbar 1 Stunde entgast. Nach dem Abkühlen auf 50°C fügte man zu dem Polyoxybutylen-polyoxyethylen-glykol unter Rühren bei dieser Temperatur innerhalb eines Zeitraums von 45 Minuten 212 Gew.-Teile 2,4-Toluylendiisocyanat. Anschließend wird die Reaktionsmischung in ungefähr 5 Minuten auf 80°C erwärmt und die Prepolymerbildung bei dieser Temperatur in 2 Stunden unter Rühren zu Ende geführt.
Das erhaltene Prepolymere besaß einen NCO-Gehalt von 4,6 Gew.-%.

### 12a) Herstellung eines NCO-Gruppen enthaltenden Prepolymeren gemäß der Erfindung

Man verfuhr analog den Angaben des Beispiel VIIa, versetzte jedoch das Polyoxybutylen-polyoxyethylen-glykol mit 0,5 Gew.-Teilen Triglycidylisocyanurat.

Das erhaltene Prepolymere besaß einen NCO-Gehalt von 4,6 Gew.-% und eine Viskosität bei 23°C von 940 m·Pas.

### Herstellung eines PU-Gießelastomeren

### Vergleichsbeispiel VIIb

Zu 1000 Gew.-Teilen des gemäß Vergleichsbeispiel VIIa hergestellten und auf 90°C erwärmten NCO-Gruppen enthaltenden Prepolymeren fügte man unter intensivem Rühren 103 Gew.-Teile auf 90°C erwärmtes 3,3'-Dichlor-4,4'-diamino-diphenylmethan. Nachdem die Reaktionsmischung aufgrund der exothermen Reaktion eine Temperatur von 115°C erreichte, wurde diese in ein auf 110°C temperiertes, metallisches Formwerkzeug gegossen und aushärten gelassen. Sobald der Prüfkörper eine ausreichende Stabilität aufwies, wurde er entformt und bei 100°C 24 Stunden lang getempert.

### Beispiel 12b

Man verfuhr analog den Angaben des Vergleichsbeispiels VIIb, verwendete jedoch das gemäß Beispiel 12a hergestellte NCO-Gruppen enthaltende Prepolymere.

Die an Prüfkörpern gemessenen mechanischen Eigenschaften sind in Tabelle 2 zusammengefaßt.

**Tabelle 2-**

| PU-Gießelastomere | | | | | | |
|---|---|---|---|---|---|---|
| | Härte-Shore | Farbe | Ölquellung [%] | Zugfestigkeit [N/mm²] | Zugdehnung [%] | Abrieb [mg] |
| Beispiel 12b | 88 A | farblos | 8,6 | 40,2 | 554 | 38 |
| Vergleichsbeispiel VIIb | 88 A | braundunkelgelb | 8,6 | 6,8 | 95 | 112 |

## Patentansprüche

1. Verfahren zur Herstellung von Polyurethan-Elastomeren durch Umsetzung von
a) organischen und/oder modifizierten organischen Polyisocyanaten mit
b) Polyoxybutylen-polyoxyalkylen-glykolen mit einem Molekulargewicht von 500 bis 9000,
c) Kettenverlängerungs- und/oder Vernetzungsmitteln mit einem Molekulargewicht kleiner als 400 und
d) Glycidylverbindungen
in Gegenwart oder Abwesenheit von
e) Treibmitteln
f) Katalysatoren
g) Hilfsmitteln und/oder Zusatzstoffen,
wobei man die Aufbaukomponenten (a) bis (c) in solchen Mengen verwendet, daß das Äquivalenzverhältnis von NCO-Gruppen (a) zur Summe der reaktiven Wasserstoffatome der Komponenten (b) und (c) 0,95 bis 1,15 : 1 beträgt, dadurch gekennzeichnet, daß man als Polyoxybutylen-polyoxyalkylen-glykole (b) verwendet:
Polyoxybutylen-polyoxyethylen-glykole, Polyoxybutylen-polyoxypropylen-glykole, Polyoxybutylen-polyoxypropylen-polyocyethylen-glykole oder Mischungen aus mindestens 2 der genannten Polyoxybutylen-polyoxyalkylenglykole und die Glycidylverbindungen (d) Einheiten mit der Struktur 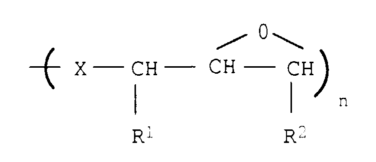 gebunden enthalten, in der bedeuten:
n eine Zahl von 1 bis 6
X eine Alkylen-, Arylengruppe, ein Sauerstoff- oder Stickstoffbrückenglied,
R¹ und R² gleiche oder verschiedene Reste aus der Gruppe Wasserstoff, Methyl und Ethyl.

2. Verfahren nach Anspruch 1, dadurch gekennzeichnet, daß die Polyoxybutylen-polyoxyalklen-glykole (b) ein Molekulargewicht von 500 bis 9000 und mindestens 50 Gew.-%, bezogen auf das Gesamtgewicht, Oxybutyleneinheiten besitzen, die als Block oder in statistischer Verteilung gebunden sind.

3. Verfahren nach Anspruch 1, dadurch gekennzeichnet, daß die Glycidylverbindungen (d) als Brückenglied X Sauerstoff oder Stickstoff gebunden haben.

4. Verfahren nach Anspruch 1, dadurch gekennzeichnet, daß die Glycidylverbindungen (d) ausgewählt sind aus der Gruppe Butylenglykol-di-glycidylether, Bisphenol-A-diglycidylether, Triglycidyl-p-aminophenol, Triglycidylisocyanurat, Tetraglycidyl-4,4'-diamino-diphenylmethan und Tetrakis(4-(glycidyloxy)phenyl)ethan.

5. Verfahren nach Anspruch 1, dadurch gekennzeichnet, daß man als Glycidylverbinding (d) Bisphenol-A-diglycidylether verwendet.

6. Verfahren nach Anpsruch 1, dadurch gekennzeichnet, daß man die Glycidylverbindungen (d) in einer Menge von 0,1 bis 5 Gew.-% bezogen auf das Gesamtgewicht der Aufbaukomponenten (b) und (d) verwendet.

7. Verfahren nach Anspruch 1, dadurch gekennzeichnet, daß man die Aufbaukomponenten (a) bis (c) in solchen Mengen verwendet, daß das Äquivalenzverhältnis von NCO-Gruppen (a) zur Summe der reaktiven Wasserstoffatome der Komponenten (b) und (c) 1,01 bis 1,05 : 1 beträgt.

8. Stoffmischungen, die, bezogen auf das Gesamtgewicht, bestehen aus
85 bis 99,95 Gew.-% mindestens eines Polyoxybutylen-polyoxyalkylenglykols (b) mit einem Molekulargewicht von 500 bis 9000, das mindestens 50 Gew.-%, bezogen auf das Gesamtgewicht, Oxybutyleneinheiten besitzt und das die Oxybutylen- und Oxyalkyleneinheiten blockweise oder in statistischer Verteilung gebunden enthält, ausgewählt aus der Gruppe der Polyoxybutylen-polyoxyethylen-glykole, Polyoxybutylen-polyoxypropylen-glykole und Polyoxybutylen-polyoxypropylen-polyoxyethylen-glykole und 0,05 bis 15 Gew.-% mindestens einer Glycidylverbindung (d), die Einheiten mit der Struktur 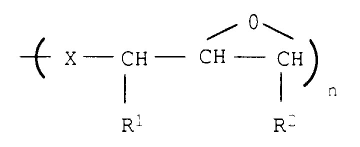 gebunden enthalten, in der bedeuten:
n eine Zahl von 1 bis 6
X eine Alkylen-, Arylengruppe, ein Sauerstoff- oder Stickstoffbrückenglied,
R¹ und R² gleiche oder verschiedene Reste aus der Gruppe der Methyl- oder Ethylreste und vorzugsweise Wasserstoff.

9. Stoffmischungen nach Anspruch 8, dadurch gekennzeichnet, daß die Glycidylverbindungen (d) ausgewählt sind aus der Gruppe Butylenglykol-diglycidylether, Bisphenol-A-diglycidylether, Triglycidyl-p-aminophenol, Triglycidylisocyanurat, Tetraglycidyl-4,4'-diamino-di-phenylmethan und Tetrakis(4-(glycidyloxy)phenyl)ethan.

10. Stoffmischungen nach Anspruch 8, dadurch gekennzeichnet, daß die Glycidylverbindung (d) Bisphenol-A-diglycidylether ist.

## Claims

1. A process for the preparation of a polyurethane elastomer by reacting
a) an organic and/or modified organic polyisocyanate with
b) a polyoxybutylene-polyoxyalkylene glycol having a molecular weight of from 500 to 9,000,
c) a chain extender and/or crosslinking agent having a molecular weight of less than 400 and
d) a glycidyl compound,
in the presence or absence of
e) blowing agents,
f) catalysts,
g) assistants and/or additives,
the components (a) to (c) being used in such amounts that the ratio between the number of equivalents of NCO groups (a) and the total number of reactive hydrogen atoms in components (b) and (c) is from 0.95:1 to 1.15:1, wherein the polyoxybutylene-polyoxyalkylene glycol (b) used is: a polyoxybutylene-polyoxyethylene glycol, polyoxybutylene-polyoxypropylene glycol, polyoxybutylene-polyoxypropylene-polyoxyethylene glycol or a mixture of at least 2 of said polyoxybutylene-polyoxyalkylene glycols, and the glycidyl compound (d) contains units having the structure 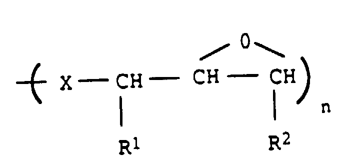 in which
n is a number from 1 to 6,
X is an alkylene or arylene group or an oxygen or nitrogen bridge, and
R¹ and R² are identical or different and are hydrogen, methyl or ethyl.

2. A process as claimed in claim 1, wherein the polyoxybutylene-polyoxyalkylene glycol (b) has a molecular weight of from 500 to 9,000 and contains at least 50% by weight, based on the total weight, of oxybutylene units which are bonded blockwise or in a random distribution.

3. A process as claimed in claim 1, wherein the glycidyl compound (d) contains bonded oxygen or nitrogen bridges X.

4. A process as claimed in claim 1, wherein the glycidyl compound (d) is selected from the group comprising butylene glycol diglycidyl ether, bisphenol A diglycidyl ether, triglycidyl-p-aminophenol, triglycidyl isocyanurate, tetraglycidyl-4,4'-diaminodiphenylmethane and tetrakis(4-(glycidyloxy)phenyl)ethane.

5. A process as claimed in claim 1, wherein the glycidyl compound (d) is bisphenol A diglycidyl ether.

6. A process as claimed in claim 1, wherein the glycidyl compound (d) is used in an amount of from 0.1 to 5% by weight, based on the total weight of starting components (b) and (d).

7. A process as claimed in claim 1, wherein the starting components (a) to (c) are used in such amounts that the ratio between the number of equivalents of NCO groups (a) and the total number of reactive hydrogen atoms in components (b) and (c) is from 1.01 to 1.05:1.

8. A composition which comprises, based on the total weight,
from 85 to 99.95% by weight of at least one polyoxybutylene-polyoxyalkylene glycol (b) which has a molecular weight of from 500 to 9,000, contains at least 50% by weight, based on the total weight, of oxybutylene units and contains the oxybutylene and oxyalkylene units bonded blockwise or in a random distribution, selected from the group comprising polyoxybutylene-polyoxyethylene glycols, polyoxybutylene-polyoxypropylene glycols and polyoxybutylene-polyoxypropylene-polyoxyethylene glycols, and from 0.05 to 15% by weight of at least one glycidyl compound (d) which contains bonded units having the structure 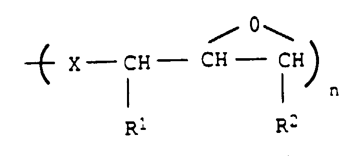 in which
n is a number from 1 to 6,
X is an alkylene or arylene group or an oxygen or nitrogen bridge, and
R¹ and R² are identical or different and are methyl or ethyl or preferably hydrogen.

9. A composition as claimed in claim 8, wherein the glycidyl compound (d) is selected from the group comprising butylene glycol diglycidyl ether, bisphenol A diglycidyl ether, triglycidyl-p-aminophenol, triglycidyl isocyanurate, tetraglycidyl-4,4'-diaminodiphenylmethane and tetrakis(4-(glycidyloxy)phenyl)ethane.

10. A composition as claimed in claim 8, wherein the glycidyl compound (d) is bisphenol A diglycidyl ether.

## Revendications

1. Procédé de fabrication d'élastomères de polyuréthanne par la réaction
a) de polyisocyanates organiques et/ou organiques modifiés avec
b) des polyoxybutylènepolyoxyalkylèneglycols possédant un poids moléculaire de 500 à 9000,
c) des agents d'allongement des chaînes et/ou de réticulation d'un poids moléculaire inférieur à 400 et
d) des composés glycidyliques,
en présence ou en l'absence
e) d'agents porogènes,
f) de catalyseurs,
g) d'adjuvants et/ou d'additifs,
où on utilise les composants constitutifs (a) à (c), en proportions telles que le rapport d'équivalence des groupes NCO (a) à la somme des atomes d'hydrogène réactifs des composants (b) et (c) varie de 0,95 à 1,15:1, caractérisé en ce que l'on utilise, à titre de polyoxybutylènepolyoxyalkylèneglycols (b),
des polyoxybutylènepolyoxyéthylèneglycols, des polyoxybutylènepolyoxypropylèneglycols, des polyoxybutylènepolyoxypropylènepolyoxyéthylèneglycols, ou des mélanges d'au moins 2 des polyoxybutylènepolyoxalkylèneglycols et qui contiennent en liaison des unités de composés glycidyliques (d), répondant à la structure suivante : 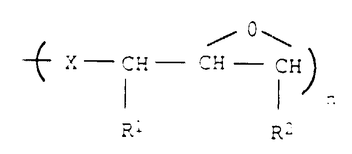 dans laquelle
n représente un nombre dont la valeur varie de 1 à 6,
X représente un radical alkylène, arylène, un élément de pontage constitué d'oxygène ou d'azote,
R¹ et R² représentent des restes identiques ou différents appartenant au groupe formé par l'hydrogène, les radicaux méthyle et éthyle.

2. Procédé suivant la revendication 1, caractérisé en ce que les polyoxybutylènepolyoxyalkylèneglycols (b) possèdent un poids moléculaire compris entre 500 et 9000 et possèdent au moins 50% en poids, par rapport au poids total, d'unités oxybutylène qui sont liés de manière séquentielle ou en répartition stochastique.

3. Procédé suivant la revendication 1, caractérisé en ce que les composés glycidyliques (d) possèdent, à titre d'élément de pontage X, de l'oxygène ou de l'azote en liaison.

4. Procédé suivant la revendication 1, caractérisé en ce que l'on choisit les composés glycidyliques (d) dans le groupe formé par l'éther diglycidylique du butylèneglycol, l'éther diglycidylique du bisphénol-A, le triglycidyl-p-aminophénol, l'isocyanurate de triglycidyle, le tétraglycidyl-4,4'-diaminodiphénylméthane et le tétrakis(4-(glycidyloxy)phényl)éthane.

5. Procédé suivant la revendication 1, caractérisé en ce que l'on utilise l'éther diglycidylique du bisphénol-A, à titre de composé glycidylique (d).

6. Procédé suivant la revendication 1, caractérisé en ce que l'on utilise les composés glycidyliques (d) en une proportion de 0,1 à 5% en poids, par rapport au poids total des composants constitutifs (b) et (d).

7. Procédé suivant la revendication 1, caractérisé en ce que l'on utilise les composants constitutifs (a) à (c), en proportions telles que le rapport d'équivalence des radicaux NCO (a) à la somme des atomes d'hydrogène réactifs des composants (b) et (c) varie de 1,01 à 1,05:1.

8. Mélanges de matières qui, par rapport au poids total, se composent de
85 à 99,95% en poids d'au moins un polyoxybutylènepolyoxyalkylèneglycol (b) d'un poids moléculaire de 500 à 9000, qui possède au moins 50% en poids, par rapport au poids total, d'unités oxybutylène et qui contient en liaison les unités oxybutylène et oxyalkylène, de manière séquentielle ou en répartition stochastique, choisi dans le groupe formé par les polyoxybutylènepolyoxyéthylèneglycols, les polyoxybutylènepolyoxypropylèneglycols et les polyoxybutylènepolyoxypropylènepolyoxyéthylèneglycols et 0,05 à 15% en poids d'au moins un composé glycidylique (d), qui contient en liaison des unités répondant à la structure suivante 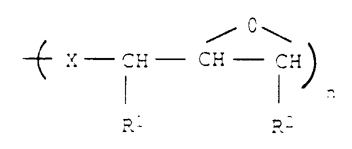 dans laquelle
n représente un nombre dont la valeur varie de 1 à 6,
X représente un radical alkylène, arylène, un élément de pontage constitué d'oxygène ou d'azote,
R¹ et R² représentent des restes identiques ou différents appartenant au groupe formé par l'hydrogène, les radicaux méthyle et éthyle.

9. Mélanges de matières suivant la revendication 8, caractérisé en ce que l'on choisit les composés glycidyliques (d) dans le groupe formé par l'éther diglycidylique du butylèneglycol, l'éther diglycidylique du bisphénol-A, le triglycidyl-p-aminophénol, l'isocyanurate de triglycidyle, le tétraglycidyl-4,4'-diaminodiphénylméthane et le tétrakis(4-(glycidyloxy)phényl)éthane.

10. Mélanges de matières suivant la revendication 8, caractérisé en ce que l'on utilise l'éther diglycidylique du bisphénol-A, à titre de composé glycidylique (d).
